# EUROPEAN PATENT APPLICATION

(11) **EP 1 754 560 A1**
(43) Date of publication of application: **21.02.2007**
(21) Application number: 04745688.4
(22) Date of filing: 08.06.2004
(51) Int. Cl.: B23B 5/00, B66B 11/08

(54) **GROOVING APPARATUS FOR ELEVATOR HOIST**

(71) Applicant: MITSUBISHI DENKI KABUSHIKI KAISHA, Chiyoda-ku, Tokyo 100-8310 (JP)
(72) Inventor: UOZUMI, Hisanori, Mitsubishi Denki K. K., Tokyo 1008310 (JP); KAJITA, Naoki, Mitsubishi Denki Kabushiki Kaisha, Tokyo 1008310 (JP)
(74) Representative: HOFFMANN EITLE
(86) International application number: PCT/JP2004/007978
(87) International publication number: WO 2005/120750

(57) **Abstract**

In a grooving apparatus which cuts rope grooves (3a) formed in a driving sheave (3) of an traction machine (1) for an elevator when the rope grooves (3a) has worn, a cutting bite (6) which is fixed to a working device (4) and forms a new rope grooves (3a) by cutting worn rope grooves (3a) is disposed in a prescribed position with respect to the driving sheave (3) by bringing part of a frame (5) to which the working device (4) is fixed into contact with two reference planes which are provided in a main body (2) of the traction machine (1) and orthogonal to each other.

## Description

### Technical Field

The present invention relates to a grooving apparatus which cuts rope grooves formed in a driving sheave of an traction machine.

### Background Art

A main rope which suspends a car of an elevator is wound around rope grooves formed in a peripheral surface of a driving sheave of an traction machine and moves in synchronization with the rotation of the driving sheave by a frictional force which is generated between the main rope and this rope grooves. For the rope grooves of the driving sheave around which the main rope is wound, various shapes are devised to ensure that a prescribed frictional force is generated between the rope grooves and the main rope. However, because the wear of the rope grooves proceeds gradually due to a microslip etc. of the main rope, problems of a decrease in the tractive force, a slip of the main rope, etc. have hitherto arisen when an elevator apparatus is operating for a long period of time. Multiple rope grooves which are formed in a peripheral surface of the driving sheave usually show different progress statuses of wear for each rope groove and, therefore, a difference in acting tension occurs between a main rope which is wound around a rope groove in which the wear has proceeded and a main rope which is wound around a rope groove in which the wear has not relatively proceeded, becoming a main factor responsible for further increasing the unevenness of wear of the rope grooves. In order to solve such problems, there has been adopted a method by which by use of a grooving apparatus of an traction machine described in the Japanese Patent Laid-Open No. 61-90802, the cutting of worn rope grooves is performed and new rope grooves is formed. However, in the grooving apparatus of an traction machine described in the above-described patent document, it is necessary to adjust horizontality between a lower steel plate, which is attached to a main body fixing section of the traction machine, and an upper steel plate, which is attached to a bearing box fixing section of the traction machine and on which a small-size lathe is installed, by using jack bolts. Therefore, this posed the problem that adjustment work before cutting requires much time, resulting in low workability. Also, because the grooving apparatus has a mechanism which adjusts the horizontality between the lower steel plate and the upper steel plate, this posed the problem that the apparatus itself becomes large, resulting in low transportability.

The present invention has been made to solve such conventional problems and ensures that in a grooving apparatus which cuts rope grooves formed in a driving sheave of an traction machine when the rope grooves have worn, the workability of installation of the grooving apparatus to the traction machine is improved and that high cutting accuracy of the grooving apparatus is realized.

Patent Document 1: Japanese Patent Laid-Open No. 61-90802

### Disclosure of the Invention

This present invention provides a grooving apparatus of a traction machine for an elevator comprising, a traction machine having a driving sheave around which a main rope of an elevator is wound and having a main body which rotatably supports this driving sheave and has at least two reference planes, a working device which is provided with a cutting bite which cuts rope grooves formed in the driving sheave, and said cutting bite which is disposed in a prescribed position with respect to the driving sheave by positioning the working device by use of the at least two reference planes of the main body.

### Brief Description of the Drawings

Figure 1 is a front view showing the first embodiment of a grooving apparatus of a traction machine for an elevator related to the present invention.
Figure 2 is a side view showing the first embodiment of a grooving apparatus of a traction machine for an elevator related to the present invention.
Figure 3 is a partial plan view showing the first embodiment of a grooving apparatus of a traction machine for an elevator related to the present invention.
Figure 4 is a partial front view showing the first embodiment of a grooving apparatus of a traction machine for an elevator related to the present invention.
Figure 5 is a partial side view showing the first embodiment of a grooving apparatus of a traction machine for an elevator related to the present invention.
Figures 6(a) to 6(c) show the second embodiment of a grooving apparatus of a traction machine for an elevator related to the present invention, Figure 6(a) being a front view thereof, Figure 6(b) a side view thereof, and Figure 6(c) a partial plan view thereof.
Figures 7(a) to 7(c) show the third embodiment of a grooving apparatus of a traction machine for an elevator related to the present invention, Figure 7(a) being a front view thereof, Figure 7(b) a side view thereof, and Figure 7(c) a partial plan view thereof.
Figures 8(a) to 8(c) show the fourth embodiment of a grooving apparatus of a traction machine for an elevator related to the present invention, Figure 8(a) being a front view thereof, Figure 8(b) a side view thereof, and Figure 8(c) an A-A arrow view of Figure 8(a).
Figures 9(a) to 9(c) show the fifth embodiment of a grooving apparatus of a traction machine for an elevator related to the present invention, Figure 9(a) being a front view thereof, Figure 9(b) a side view thereof, and Figure 9(c) a plan view thereof.

### Best Mode for Carrying Out the Invention

The present invention will be described in detail with reference to the accompanying drawings. Incidentally, in the drawings, the same or equivalent parts are designated by similar reference numerals and overlapping descriptions of these parts are simplified or omitted.

### Embodiment 1

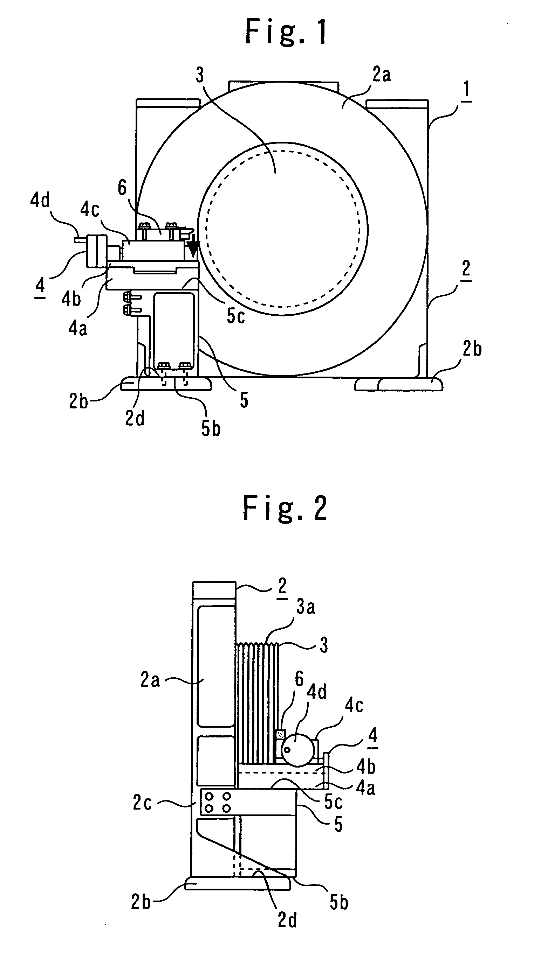

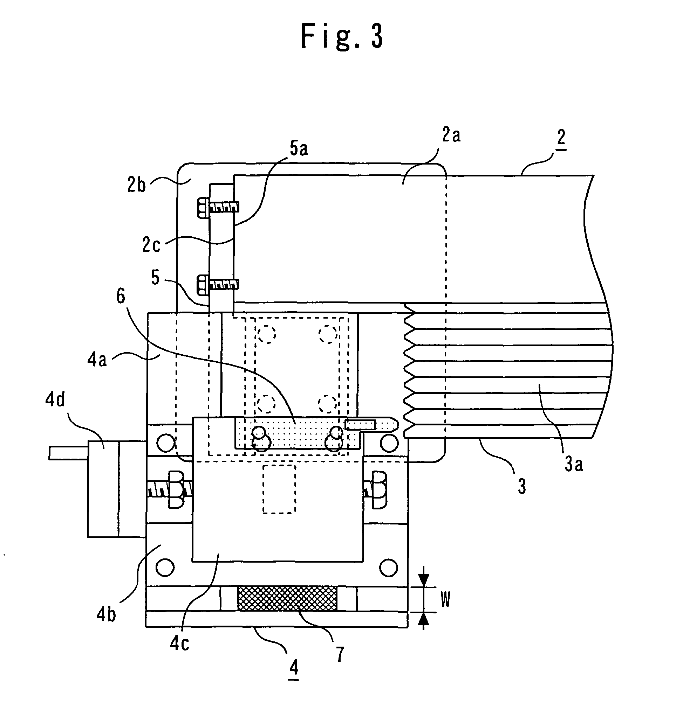

Figure 1 to Figure 5 show the first embodiment of a grooving apparatus of a traction machine for an elevator related to the present invention. In Figure 1 to Figure 3 which show the general construction of the grooving apparatus, a traction machine 1 which is installed in a machine room above an elevator shaft, in the top portion of the shaft, etc. is constituted by a main body 2 in which a driving unit (not shown), a brake device (not shown), etc. are housed, and a driving sheave 3 which is provided rotatably with respect to the main body 2 and disposed on the front side of the main body 2. This driving sheave 3 is fixed to a rotary shaft (not shown) which is provided rotatably with respect to the main body 2, and rotated by the driving unit provided within the main body 2 in an arbitrary direction and at an arbitrary speed. Multiple rope grooves 3a are formed in an endless manner on the peripheral surface of the driving sheave 3, and the driving sheave 3 is fixed to the rotary shaft so that the amount of eccentricity of the rope grooves 3a becomes smaller than a prescribed value. On the other hand, the main body 2 which supports the driving sheave 3 is constituted by internal equipment constituted by the driving unit, the brake device, etc., a case 2a which houses the internal equipment, and a supporting part 2b which is provided in both end portions under the case 2a and fixes the traction machine 1 to a machine foundation of the machine room, bodies fixed to the shaft, such as shaft beams. This case 2a which constitutes an outermost portion of the traction machine 1 is provided, on one side surface thereof which is below the center of rotation of the driving sheave 3, with a vertical reference plane 2c which has a prescribed verticality and a prescribed parallelism with respect to the direction of the rotary shaft of the driving sheave 3. Also, on the top surface of the supporting part 2b on one side where this vertical reference plane 2c is provided, there is provided a horizontal reference plane 2d which has a prescribed horizontality and the height of which to the center of rotation of the driving sheave 3 is within a prescribed accuracy. Therefore, the main body 2 of the traction machine 1 has an L-shaped reference plane which is constituted by two planes of the vertical reference plane 2c and the horizontal reference plane 2d which are orthogonal to each other.

A working device 4, which will be described later, is fixed to the main body 2 of the traction machine 1 via a frame 5 and disposed in such a manner that a cutting bite 6 fixed to the upper part of the working device 4 has almost the same height as the center of rotation of the driving sheave 3, has a prescribed horizontality and is orthogonal to the rotary shaft of the driving sheave 3. This frame 5 which fixes the working device 4 to the main body 2 is in the form of a roughly square annulus in the center of which a hollow portion is formed and has an arm portion which extends horizontally on one side surface thereof. And this frame 5 is provided, in an arm portion thereof, with a vertical reference plane 5a which comes into contact with the vertical reference plane 2c of the main body 2 and, on a bottom surface thereof, with a horizontal reference plane 5b which comes into contact with the horizontal reference plane 2d of the main body 2, the vertical reference plane 5a and the horizontal reference plane 5b having a prescribed squareness. And on the top surface of the frame 5 which is positioned immediately above the horizontal reference plane 5b, there is provided a working device mounting surface 5c which has a prescribed parallelism with the horizontal reference plane 5b and the distance of which from this horizontal reference plane 5b is within a prescribed accuracy. On the other hand, the working device 4 which is installed in the main body 2 of the traction machine 1 via the frame 5 is disposed in such a manner that the bottom surface thereof is face to the working device mounting surface 5c of the frame 5. And the working device 4 is provided with a bed 4a which is fixed to this working device mounting surface 5c, a carriage 4b which is provided on the top surface of this bed 4a and slides horizontally on the bed 4a in the direction of the rotary shaft of the driving sheave 3, a cutter bed 4c which is fixed to the top surface of this carriage 4b, and a cut depth adjusting part 4d which moves this cutter bed 4c in a direction orthogonal to the carriage 4b, that is, horizontally to the rope groove 3a. And the bottom surface of the bed 4a which becomes the bottom surface of this working device 4 and the top surface of the cutter bed 4c which becomes the top surface of the working device 4 are provided in such as manner that the two have a prescribed parallelism and that the distance between the two planes becomes within a prescribed accuracy. The top surface of the cutter bed 4c to which the cutting bite 6 is fixed is disposed so as to be positioned immediately above a contact portion between the working device mounting surface 5c of the frame 5 and the bottom surface of the bed 4a.

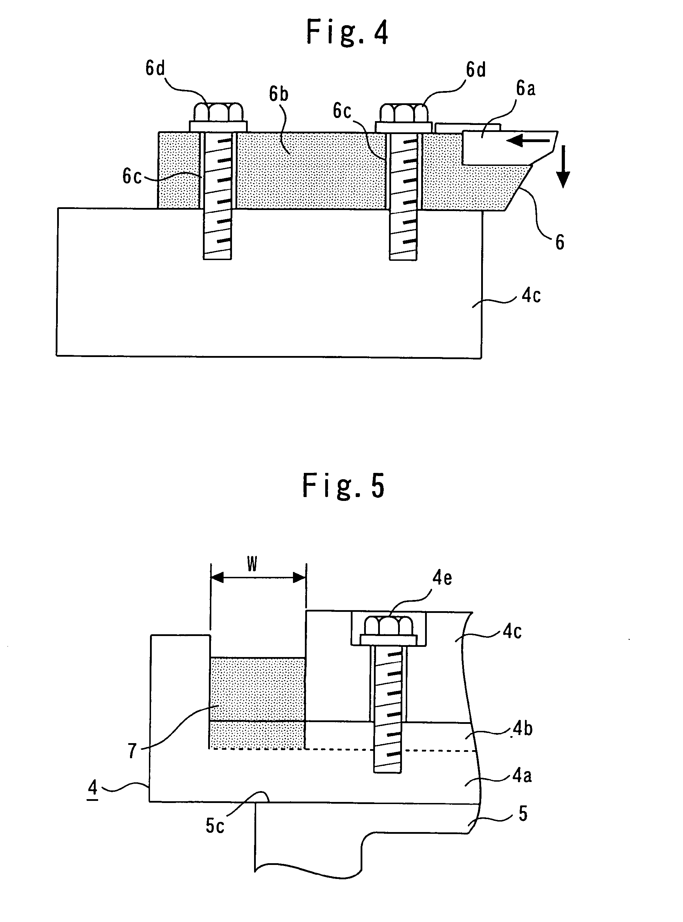

Figure 4 shows a partial front view of the grooving apparatus of an traction machine for an elevator in which the cutting bite 6 is attached to the cutter bed 4c of the working device 4. In the figure, the cutting bite 6 is constituted by a tip 6a which cuts the rope grooves 3a of the driving sheave 3 and a holder 6b which holds this tip 6a having a roughly rectangular shape. And in the holder 6b there are provided multiple through holes 6c which pierce through the holder 6b from the bottom surface thereof to the top surface thereof, and the cutting bite 6 is directly fixed to the cutter bed 4c by use of bolts 6d via the through holes 6c.

When worn rope grooves 3a on the peripheral surface of the driving sheave 3 of the traction machine 1 is cut by using the grooving apparatus of the traction machine 1 constructed as described above, the operator first fixes the frame 5, to the working device mounting surface 5c of which the working device 4 has been fixed beforehand, to the main body 2 of the traction machine 1. By disposing the frame 5 in such a manner that the vertical reference plane 5a of the frame 5 comes into contact with the vertical reference plane 2c of the main body 2 and the horizontal reference plane 5b of the frame 5 comes into contact with the horizontal reference plane 2d of the main body 2, the positioning of the working device 4 provided on the working device mounting surface 5c of the frame 5 is performed, with the result that the cutting bite 6 fixed to the top surface of the cutter bed 4c of the working device 4 is disposed so as to obtain almost the same height as the center of rotation of the driving sheave 3, have a prescribed horizontality and be orthogonal to the rotary shaft of the driving sheave 3. Next, the operator moves the carriage 4b of the working device 4 in the direction of the rotary shaft of the driving sheave 3 and disposes the tip 6a of the cutting bite 6 so as to become opposite to the rope groove 3a. After the adjustment of the position of the cutting bite 6, the operator rotates the driving sheave 3 in one direction and cuts a new rope groove 3a by operating the cut depth adjusting part 4d. Incidentally, when the working device 4 is disposed as shown in Figure 1, it becomes possible to cut the rope groove 3a by counterclockwise rotating the driving sheave 3. Next, in order to cut a rope groove 3a adjacent to the rope groove 3a which has been cut, the tip 6a of the cutting bite 6 is disposed so as to become opposite to a rope groove to be cut. In this position adjustment, as shown in Figure 5, first, the carriage 4b is horizontally moved in the direction of the rotary shaft of the driving sheave 3 and a block 7 having almost the same width W as the pitch of the rope grooves 3a of the driving sheave 3 is disposed between an end portion of the bed 4a and the carriage 4b. Next, in order to ensure that the position of the cutting bite 6 is moved toward the main body 2 side from the position in which the last cutting has been performed by a distance corresponding to the width W of the block 7, the carriage 4b is moved in such a manner that the two side surfaces of the block 7 come into contact with the bed 4a and the carriage 4b, and the carriage 4b is fixed to the bed 4a by use of a bolt 4e. Incidentally, by adjusting the quantity of the blocks 7 inserted to between the bed 4a and the carriage 4b, it becomes possible to perform the position adjustment of the cutting bite 6 so as to become opposite to all rope grooves 3a.

According to the first embodiment of the present invention, because the positioning of the working device 4 provided on the working device mounting surface 5c of the frame 5 is performed by ensuring disposition so that the vertical reference plane 5a and horizontal reference plane 5b of the frame 5 to which the working device 4 has been fixed beforehand are respectively brought into contact with the reference planes consisting of two planes of the mutually orthogonal vertical reference plane 2c and horizontal reference plane 2d which are provided in the main body 2 of the traction machine 1, it is possible to keep the height of the cutting bite 6 fixed to the working device 4, the horizontality thereof, and the angle thereof to the rotary shaft of the driving sheave 3 each within a prescribed accuracy and it becomes possible to perform the cutting of the rope grooves 3a at short times and with excellent accuracy without requiring time in the installation work of the grooving apparatus. Furthermore, because the position adjustment of the cutting bite 6 for multiple rope grooves 3a can be easily performed by adjusting the quantity of the blocks 7 having the width W, which are to be inserted to between an end portion of the bed 4a and the carriage 4b, it is possible to shorten working hours. Furthermore, because the cutter bed 4c to which the cutting bite 6 is fixed is disposed immediately above a contact portion between the working device mounting surface 5c of the frame 5 and the bottom surface of the bed 4a, it is possible for the main body 2 of the traction machine 1 to receive a main component force which works on the cutting bite 6 during cutting and this permits small size design of the working device 4 and the frame 5. Incidentally, in a case where it is unnecessary to install the working device 4 in the traction machine 1 as in ordinary operation of an elevator apparatus, covers which protect the vertical reference plane 2c and horizontal reference plane 2d provided in the traction machine 1 and the like may be provided.

### Embodiment 2

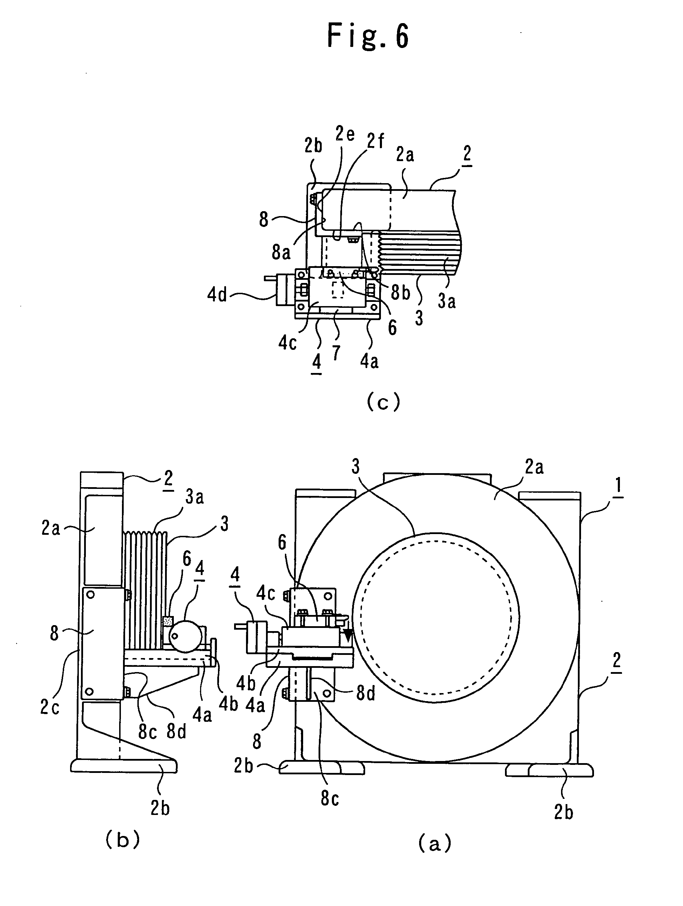

Figures 6(a) to 6(c) show the second embodiment of a grooving apparatus of a traction machine for an elevator related to the present invention, Figure 6(a) being a front view thereof, Figure 6(b) a side view thereof, and Figure 6(c) a partial plan view thereof. In the figures, a case 2a which constitutes an outermost portion of an traction machine 1 for an elevator is provided, on one side surface thereof having almost the same height as the center of rotation of a driving sheave 3, with a first vertical reference plane 2e which has a prescribed verticality and a prescribed parallelism with respect to the direction of the rotary shaft of a driving sheave 3, and on a front surface of the case 2a which is very close to the first vertical reference plane 2e, there is provided a second vertical reference plane 2f which has a prescribed verticality and a prescribed squareness with respect to the first vertical reference plane 2e. Therefore, a main body 2 of this traction machine 1 has an L-shaped reference plane consisting of two planes of the first vertical reference plane 2e and the second vertical reference plane 2f which are orthogonal to each other.

The frame 8 which fixes the working device 4 to the main body 2 of the traction machine 1 has a roughly L-shaped configuration as a plan view and two inner side surfaces 8a and 8b which represent this L-shaped configuration have a prescribed squareness and are substantially orthogonal to each other. On the front side of the main body 2 of this frame 8, there is provided a working device mounting surface 8c having a prescribed parallelism to the inner side surface 8b, and a working device 4 to which a cutting bite 6 is fixed is installed on this working device mounting surface 8c. Incidentally, the working device 4 is disposed in such a manner that one end surface in the moving direction of a carriage 4b of a bed 4a comes into contact with the working device mounting surface 8c of the frame 8, and a reinforcing plate 8d is fixed to each of the working device mounting surface 8c of the frame 8 and the bottom surface of the bed 4a which becomes the bottom surface of the working device 4, the reinforcing plate 8d being orthogonal to both.

When a worn rope groove 3a on the peripheral surface of the driving sheave 3 of the traction machine 1 is cut by using the grooving apparatus of the traction machine 1 constructed as described above, the operator first fixes the frame 8, to the working device mounting surface 8c of which the working device 4 has been fixed beforehand, to the main body 2 of the traction machine 1. By disposing the frame 8 in such a manner that the mutually orthogonal inner side surfaces 8a and 8b of the frame 8 respectively come into contact with the first and second vertical reference planes 2e and 2f of the main body 2 of the traction machine 1, the positioning of the working device 4 provided on the working device mounting surface 5c of the frame 8 is performed, with the result that the cutting bite 6 fixed to the top surface of the cutter bed 4c of the working device 4 is disposed so as to obtain almost the same height as the center of rotation of the driving sheave 3, have a prescribed horizontality and be orthogonal to the rotary shaft of the driving sheave 3. Incidentally, by performing the same operation as with the first embodiment in other respects, it is possible to cut each of the multiple rope grooves 3a formed in the driving sheave 3.

According to the second embodiment of the present invention, because the roughly L-shaped reference plane consisting of two planes of the mutually orthogonal first vertical reference plane 2e and second vertical reference plane 2f which are formed in the main body 2 of the traction machine 1 are provided on one side surface and front surface of the case 2a in the vicinity of the driving sheave 3, it is possible to reduce the size of the frame 8, resulting in a further improvement in the transportability and installability of the grooving apparatus. Incidentally, the second embodiment has the same construction and effect as with the first embodiment in other respects.

### Embodiment 3

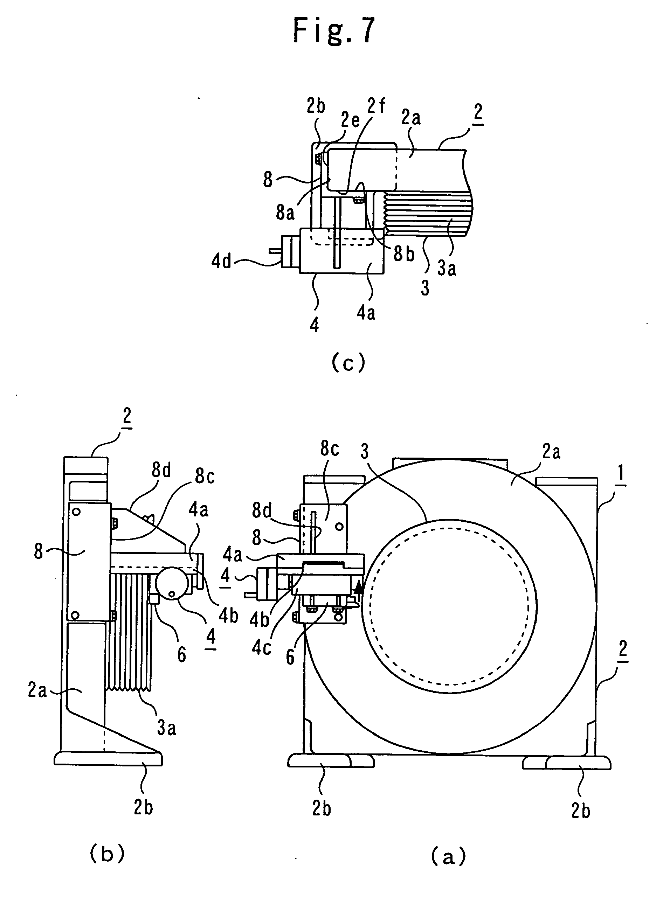

Figures 7(a) to 7(c) show the third embodiment of a grooving apparatus of a traction machine for an elevator related to the present invention, Figure 7(a) being a front view thereof, Figure 7(b) a side view thereof, and Figure 7(c) a partial plan view thereof. In the figures, a case 2a which constitutes an outermost portion of an traction machine 1 for an elevator is provided, on one side surface thereof which is a little above the center of rotation of a driving sheave 3, with a first vertical reference plane 2e which has a prescribed verticality and a prescribed parallelism with respect to the direction of the rotary shaft of a driving sheave 3, and on a front surface of the case 2a which is very close to the first vertical reference plane 2e, there is provided a second vertical reference plane 2f which has a prescribed verticality and a prescribed squareness with respect to the first vertical reference plane 2e. Therefore, a main body 2 of this traction machine 1 has an L-shaped reference plane consisting of two planes of the first vertical reference plane 2e and the second vertical reference plane 2f which are orthogonal to each other.

A working device 4 provided on a working device attaching surface 8c of a frame 8 having a roughly L-shaped configuration as a plan view is disposed top side down compared to the second embodiment, and a reinforcing plate 8d which is orthogonal to the working device attaching surface 8c and a bed 4a is provided above the working device 4. That is, a cutting bite 6 is disposed in a lowermost portion of the working device 4 and the bed 4a is provided in the uppermost portion of the working device 4.

When a worn rope groove 3a on the peripheral surface of the driving sheave 3 of the traction machine 1 is cut by using the grooving apparatus of the traction machine 1 constructed as described above, the driving sheave 3 is rotated so that a main component force during cutting works upward on the cutting bite 6. That is, in Figure 7(a), the driving sheave 3 is clockwise rotated.

According to the third embodiment of the present invention, because the working device 4 is disposed so that a main component force during the cutting of the rope groove 3a of the driving sheave 3 works upward on the cutting bite 6 disposed beside the driving sheave 3, the dischargeability of chips generated during the cutting of the rope groove 3a is improved. Incidentally, the third embodiment has the same construction and effect as with the second embodiment in other respects.

### Embodiment 4

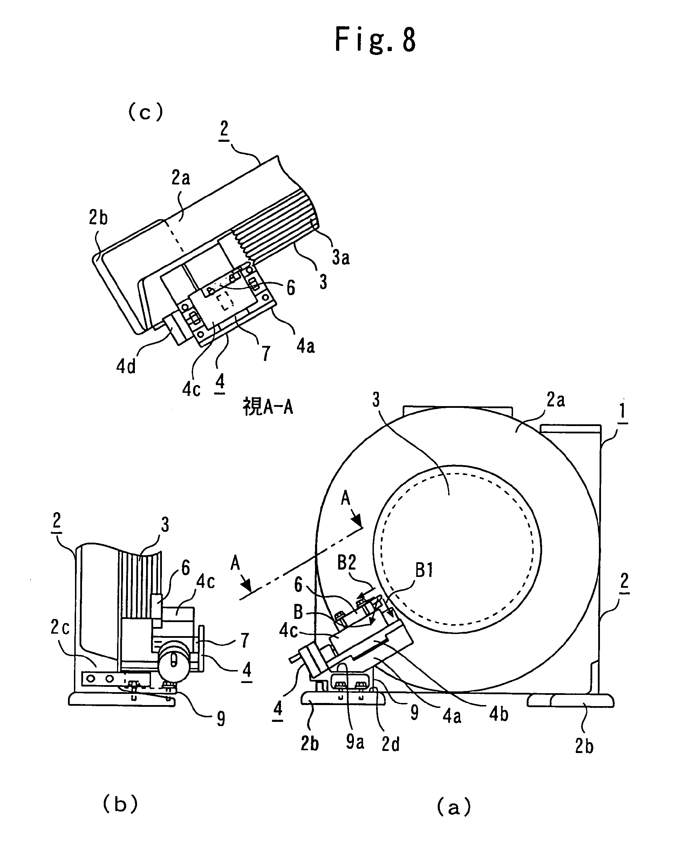

Figures 8(a) to 8(c) show the fourth embodiment of a grooving apparatus of a traction machine for an elevator related to the present invention, Figure 8(a) being a front view thereof, Figure 8(b) a side view thereof, and Figure 8(c) an A-A arrow view of Figure 8(a). In the figures, a case 2a which constitutes an outermost portion of an traction machine 1 for an elevator is provided, on one side surface thereof which is below the center of rotation of a driving sheave 3, with a vertical reference plane 2c which has a prescribed verticality and a prescribed parallelism with respect to the direction of the rotary shaft of a driving sheave 3. And on the top surface of a supporting part 2b on one side where this vertical reference plane 2c is provided, there is provided a horizontal reference plane 2d which has a prescribed horizontality and the height of which to the center of rotation of the driving sheave 3 is within a prescribed accuracy. Therefore, a main body 2 of the traction machine 1 has an L-shaped reference plane consisting of two planes of the vertical reference plane 2c and the horizontal reference plane 2d which are orthogonal to each other.

In the same manner as with the first embodiment, a frame 9 which is positioned by coming into contact with the vertical reference plane 2c and horizontal reference plane 2d of the main body 2 and fixed to the main body 2, is provided, on the top surface thereof, with a working device mounting surface 9a, and a working device 4 is fixed to this working device mounting surface 9a. A lower portion of a bed 4a of the working device 4 is provided with an inclined surface having a prescribed angle, and the working device 4 and the frame 9 are fixed together so that this inclined surface and the horizontal working device mounting surface 9a of the top surface of the frame 9 come into contact with each other. That is, the working device 4 is disposed in such a manner that a cutting bite 6 fixed to a cutter bed 4c faces the direction of the center of rotation of the driving sheave 3 below aslant the driving sheave 3 and that this cutting bite 6 moves in the direction of the center of rotation of the driving sheave 3 by the operation of a cut depth adjusting part 4d.

When a worn rope groove 3a on the peripheral surface of the driving sheave 3 of the traction machine 1 is cut by using the grooving apparatus of the traction machine 1 constructed as described above, the grooving apparatus is disposed so that a resultant force B of a main component force B1 and a back component force B2, which acts on the cutting bite 6, faces a contact portion between the inclined surface of the working device 4 and the working device mounting surface 9a of the frame 9 and, therefore, it is possible to rationally support forces working during cutting of the rope grooves 3a, thereby making it possible to reduce the size of the frame 9.

### Embodiment 5

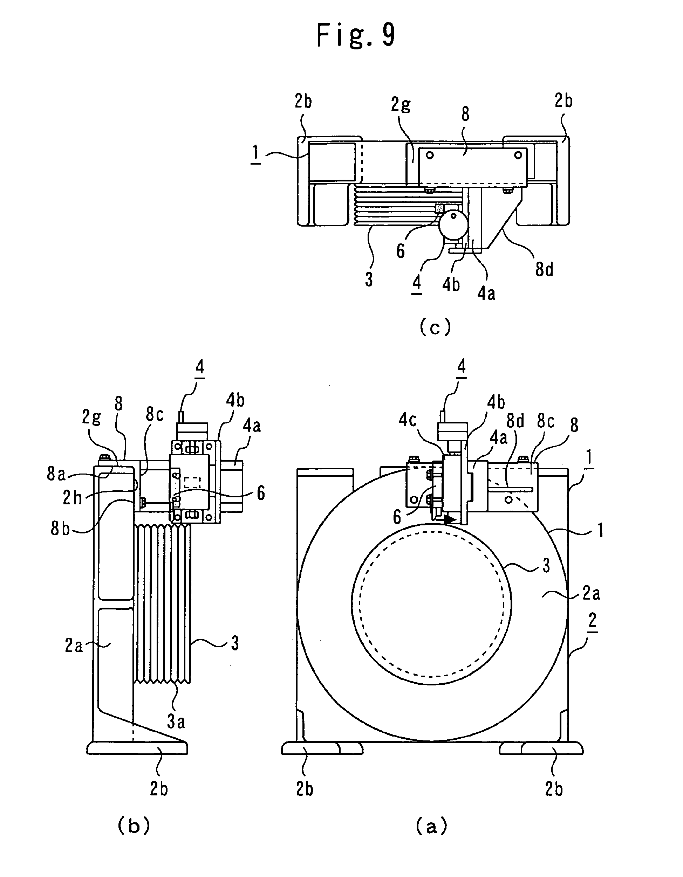

Figures 9(a) to 9(c) show the fifth embodiment of a grooving apparatus of a traction machine for an elevator related to the present invention, Figure 9(a) being a front view thereof, Figure 9(b) a side view thereof, and Figure 9(c) a plan view thereof. In the figures, a case 2a which constitutes an outermost portion of an traction machine 1 is provided, on the top surface thereof, with a horizontal reference plane 2g which has a prescribed horizontality and the height of which from the center of rotation of a driving sheave 3 is within a prescribed accuracy and on a front surface of the case 2a which is very close to the horizontal reference plane 2g, there is provided a vertical reference plane 2h which has a prescribed verticality and a prescribed squareness with respect to the horizontal reference plane 2g. Therefore, a main body 2 of the traction machine 1 has an L-shaped reference plane consisting of two planes of the horizontal reference plane 2g and the vertical reference plane 2h which are orthogonal to each other.

A roughly L-shaped frame 8 which fixes a working device 4 to a main body 2 of the traction machine 1 is fixed to the case 2a in such a manner that two inner side surfaces 8a and 8b, which are orthogonal, respectively come into contact with the horizontal reference plane 2g and the vertical reference plane 2h. A working device mounting surface 8c is provided in this frame 8 on the front side of the traction machine 1, and the working device 4 is provided on this working device mounting surface 8c via a reinforcing plate 8d. The working device 4 is disposed in such a manner that a cutting bite 6 fixed to a cutter bed 4c is positioned substantially above the rotary shaft of the driving sheave 3 and moves vertically by the operation of a cut depth adjusting part 4d.

According to the fifth embodiment of the present invention, because the working device 4 is disposed above the driving sheave 3, during cutting the operator can easily check the cutting bite 6 and it is possible to improve workability in adjustment and cutting. Furthermore, because the working device 4 does not protrude from both sides of the traction machine 1 as a plan view, it is possible to perform cutting even in a place where the working space on both sides of the traction machine 1 is narrow. Incidentally, the fourth embodiment has the same construction and effect as with the first embodiment in other respects.

### Industrial Applicability

As described above, according to the grooving apparatus of an traction machine for an elevator of the present invention, the working device is positioned by use of at least two reference planes provided in the main body of the traction machine and, therefore, a cutting bite which cuts rope grooves formed in the driving sheave can be disposed in a prescribed position with respect to the driving sheave. Therefore, it becomes unnecessary to perform the angle adjustment etc. of the cutting bite before the cutting of the rope grooves, with the result that the workability of installation to the traction machine is improved and that high cutting accuracy can be realized.

## Claims

1. A grooving apparatus of a traction machine for an elevator comprising:
a traction machine having a driving sheave around which a main rope of an elevator is wound and having a main body which rotatably supports this driving sheave and has at least two reference planes;
a working device which is provided with a cutting bite which cuts rope grooves formed in the driving sheave; and
said cutting bite which is disposed in a prescribed position with respect to the driving sheave by positioning the working device by use of the at least two reference planes of the main body.

2. A grooving apparatus of a traction machine for an elevator comprising:
a traction machine having a driving sheave around which a main rope of an elevator is wound and having a main body which rotatably supports this driving sheave and has at least two reference planes;
a working device which is provided with a cutting bite which cuts rope grooves formed in the driving sheave;
a frame which fixes this working device to the main body of the traction machine; and
said cutting bite which is disposed in a prescribed position with respect to the driving sheave by bringing part of the frame, to which the working device is fixed, into contact with the at least two reference planes of the main body.

3. The grooving apparatus of a traction machine for an elevator according to claim 1 or 2, **characterized in that** one of the two reference planes provided in the main body of the traction machine is provided on a side surface of the main body and has a prescribed verticality.

4. The grooving apparatus of a traction machine for an elevator according to claim 1 or 2, **characterized in that** one of the two reference planes provided in the main body of the traction machine is provided on a top surface of a supporting part which fixes the traction machine and has a prescribed horizontality.

5. The grooving apparatus of a traction machine for an elevator according to claim 1 or 2, **characterized in that** one of the two reference planes provided in the main body of the traction machine is provided on a front surface of the main body in which the driving sheave is disposed and has a prescribed verticality.

6. The grooving apparatus of a traction machine for an elevator according to claim 1 or 2, **characterized in that** one of the two reference planes provided in the main body of the traction machine is provided on a top surface of the main body and has a prescribed horizontality.

7. The grooving apparatus of a traction machine for an elevator according to claim 2, **characterized in that** the frame is positioned by coming into contact with both of a reference plane provided on a side surface of the main body of the traction machine and a reference plane provided on a top surface of a supporting part which fixes the traction machine.

8. The grooving apparatus of a traction machine for an elevator according to claim 2, **characterized in that** the frame is positioned by coming into contact with both of a reference plane provided on a side surface of the main body of the traction machine and a reference plane provided on a front surface of the main body in which the driving sheave is disposed.

9. The grooving apparatus of a traction machine for an elevator according to claim 2, **characterized in that** the frame is positioned by coming into contact with both of a reference plane provided on a top surface of the main body of the traction machine and a reference plane provided on a front surface of the main body in which the driving sheave is disposed.

10. The grooving apparatus of a traction machine for an elevator according to any of claims 1 to 9, **characterized in that** the two reference planes provided in the traction machine are orthogonal to each other.

11. The grooving apparatus of a traction machine for an elevator according to any of claims 1 to 10, **characterized in that** the working device performs the positioning of the cutting bite in the direction of the rotary shaft of the driving sheave by use of a block having the same width as the spacing of rope grooves formed on a peripheral surface of the driving sheave.
